# EUROPÄISCHE PATENTSCHRIFT

(11) **EP 3 305 061 B1**
(45) Veröffentlichungstag und Bekanntmachung des Hinweises auf die Patenterteilung: **02.12.2020**
(21) Anmeldenummer: 17203943.0
(22) Anmeldetag: 04.10.2010
(51) Int. Cl.: A01G 3/037

(54) **HANDBETÄTIGTE GARTENSCHERE**
MANUALLY OPERATED GARDEN SHEARS
SECATEUR À COMMANDE MANUELLE

(43) Veröffentlichungstag der Anmeldung: 11.04.2018
(62) Teilanmeldung aus: 10762660.8
(73) Patentinhaber: Husqvarna AB, 561 82 Huskvarna (SE)
(72) Erfinder: SCHIEDT, Christoph, 88483 Burgrieden (DE); NÄGELE, Karl-Peter, 88441 Mittelbiberach (DE)

(56) Entgegenhaltungen:
- EP-A1- 1 574 125
- EP-B1- 0 028 997
- WO-A2-2008/023117
- DE-A1- 19 849 976
- DE-U1- 20 205 106
- DE-U1- 29 613 531
- FR-A1- 2 462 094
- US-A1- 2010 163 263

## Beschreibung

Die Erfindung betrifft eine handbetätigbare Gartenschere.

Bei handbetätigbaren Gartenscheren wird die Schließkraft, die zum Durchschneiden von zwischen Messern einer Messeranordnung befindlichem Schnittgut erforderlich ist, durch die Handkraft eines Benutzers aufgebracht, welcher die Schere an zwei relativ zueinander beweglichen Handhebeln mit einer Hand oder mit beiden Händen ergreift.

Insbesondere beim Schneiden von Ästen erweist sich häufig die Handkraft des Benutzers als nicht ausreichend, um einen Ast in einem Schneidvorgang durchzuschneiden, so dass umständlich mit mehreren Teilschnitten eine Durchtrennung des Astes versucht wird. Handbetätigte Gartenscheren sind offenbart in DE 202 05 106 U1, WO 2008/023117 A2 und US 2010/163263 A1.

Der vorliegenden Erfindung liegt die Aufgabe zugrunde, eine handbetätigbare Gartenschere mit verbesserter Handhabung anzugeben.

Die Erfindung ist im unabhängigen Anspruch beschrieben. Die abhängigen Ansprüche enthalten vorteilhafte Ausgestaltungen und Weiterbildungen der Erfindung.

Durch die zuschaltbare motorische Schließkraft, worunter eine Ansteuerung des Antriebsmotors zur Ausübung einer solchen motorischen Schließkraft auf die Messeranordnung zu verstehen sei, können vorteilhafterweise Schneidvorgänge in einem Zug durchgeführt werden. Bei bevorzugter Beibehaltung der Handkraft-Betätigung auch nach Zuschalten der motorischen Schließkraft kann eine Gesamtkraft für den Schließvorgang aufgebracht werden, welche höher ist als die motorische Schließkraft, so dass der Antriebsmotor, welcher die motorisehe Schließkraft aufbringt, vorteilhafterweise in kleiner Bauform und/oder mit geringer Leistungsaufnahme ausgeführt sein kann. Die geringe Leistungsaufnahme ist insbesondere von Vorteil bei einer bevorzugten Ausführung mit einem Elektromotor als Antriebsmotor und einem Akkumulator als elektrische Energiequelle. Bei Verwendung der motorischen Schließkraft lediglich als Zusatzkraft zu der Handkraft des Benutzers kann dann der Akkumulator in kleiner Bauform ausgeführt und/oder eine lange Nutzungsdauer des Akkumulators erreicht werden.

Die motorische Schließkraft wird bei Bedarf mittels eines mit einem Finger einer den Handgriff greifenden Benutzerhand erreichbaren Betätigungselements zugeschaltet, insbesondere indem über ein solches Betätigungselement ein Schalter in der Stromversorgung des Elektromotors aus dem Akkumulator geschlossen wird.

Erfindungsgemäß erfolgt die Zuschaltung der motorischen Schließkraft automatisch durch eine elektronische Steuereinrichtung nach Maßgabe wenigstens einer Kenngröße des Schneidvorgangs, wobei eine solche Kenngröße mittels wenigstens eines Sensors und einem durch diesen gewonnenen und in der Steuereinrichtung ausgewerteten Sensorsignal bestimmt wird.

Eine solche Kenngröße des Schneidvorgangs kann insbesondere die vom Benutzer auf die Handgriffanordnung ausgeübte Handkraft sein, welche durch ein Handkraft-Sensorsignal eines Handkraft-Sensors repräsentiert sei. Ein Handkraft-Sensor ist vorteilhafterweise in einen von zwei unter der Einwirkung der Handkraft relativ zueinander verlagerbaren Handgriffen integriert und kann in vorteilhafter Ausführung durch eine Wägezelle gegeben sein. Soweit auch vorteilhafterweise die motorische Schließkraft auf die Handgriffanordnung einwirkt, ist bevorzugt der Handkraftsensor im Kraftübertragungsweg der Handkraft zur Messeranordnung vor dem Angriffspunkt der motorischen Schließkraft angeordnet.

Vorteilhafterweise ist für die Handkraft bzw. das Handkraft-Sensorsignal als erstem Sensorsignal ein Schwellwert vorgegeben in der Art, dass die Steuereinrichtung bei unter dem Schwellwert liegendem Messwert des Sensorsignals die motorische Schließkraft nicht zuschaltet. Hierdurch wird zum einen die Energiereserve eines Akkumulators geschont und zum anderen vermieden, dass bei einem von dem Benutzer gezielt mit geringer Krafteinwirkung geführten Schnitt ungewollt die motorische Schließkraft zugeschaltet wird. Der Schwellwert kann veränderlich vorgebbar sein, um eine Anpassung des Steuerverhaltens der Steuereinrichtung an kräftigere und weniger kräftige Benutzer zu ermöglichen.

Eine andere Kenngröße zur Auswertung in der Steuereinrichtung kann in vorteilhafter Ausführung die Schließgeschwindigkeit der Messeranordnung sein. Die Schließgeschwindigkeit der Messeranordnung kann in vorteilhafter Ausführung aus zeitlich aufeinander folgend ermittelten Winkelwerten eines Schließwinkels der Messeranordnung oder der Handgriffanordnung in der Steuereinrichtung gewonnen werden. Schließwinkelwerte lassen sich in vorteilhaft einfacher Weise über einen mit beiden Messern der Messeranordnung und/oder beiden Griffhebeln der Handgriffanordnung verbundenen zweiten Sensor, insbesondere einen kapazitiven Sensor oder vorzugsweise ein Potentiometer ermitteln. In bevorzugter Ausführung ist ein zweiter Sensor als Drehsensor um das Scherengewerbe ausgeführt. Soweit eine Winkelmessung in definierten gleichbleibenden Zeitabschnitten erfolgt, kann auch eine Winkeldifferenz, welche dann mit einem konstanten Faktor zur Schließgeschwindigkeit proportional ist, direkt ausgewertet werden.

Eine Auswertung eines über den zweiten Sensor gewonnenen Werts für die Schließgeschwindigkeit bzw. eine diese Schließgeschwindigkeit repräsentierende Größe zur eventuellen Zuschaltung der motorischen Schließkraft kann in der Steuereinrichtung insbesondere in der Weise erfolgen, dass die motorische Schließkraft nicht zugeschaltet wird, solange die Schließgeschwindigkeit nicht unter einen vorgebbaren zweiten oberen Schwellwert fällt.

In bevorzugter Ausführungsform erfolgt eine Steuerung der zuschaltbaren motorischen Schließkraft in der Weise, dass die Steuereinrichtung die motorische Schließkraft nur zuschaltet, wenn das Handkaft-Sensorsignal den ersten Schwellwert übersteigt und die Schließgeschwindigkeit unter dem zweiten oberen Schwellwert liegt.

Wenn die motorische Schließkraft durch die Steuereinrichtung gemäß den dort vorgegebenen Kriterien für eine oder mehrere Kenngrößen des Schneidvorgangs zugeschaltet ist, kann in erster einfacher Ausführung der Antriebsmotor ohne weitere Differenzierung eingeschaltet bleiben. Der Antriebsmotor wird bei Erreichen einer Endstellung des Schneidvorgangs, welche durch einen Endschalter oder vorzugsweise durch einen Schließwinkelsensor für die Steuereinrichtung erkennbar ist, abgeschaltet.

Eine Beibehaltung der motorischen Schließkraft bis zur Endstellung des Schneidvorgangs kann insbesondere auch vorgesehen sein, wenn das Handkraft-Sensorsignal unter den ersten Schwellwert fällt, so dass die Fortsetzung des Schneidvorgangs nach Zuschalten der motorischen Schließkraft ohne besonderen Kraftbeitrag durch die Handkraft eines Benutzers erfolgt.

In anderer vorteilhafter Ausführung kann die Steuerung der motorischen Schließkraft nach deren Zuschaltung unter weiterer fortlaufender Überprüfung der Kenngrößen des Schneidvorgangs adaptiv erfolgen, indem beispielsweise die Höhe der motorischen Schließkraft durch die Steuereinrichtung variabel steuerbar ist und/oder die motorische Schließkraft auch wieder abschaltbar ist, wenn die Handkraft des Benutzers allein für die Fortsetzung des Schneidvorgangs ausreicht. Eine solche adaptive Steuerung trägt vorteilhaft dem Umstand Rechnung, dass beim Schneiden eines Astes die aufzuwendende Kraft bzw. die Widerstandskraft des Astes im Bereich der Hälfte des Schneidvorgangs bei der Astmitte ein Maximum durchläuft und danach wieder abfällt, so dass eine motorische Zusatzkraft primär in dem Bereich der Astmitte benötigt wird.

In vorteilhafter Ausführung kann vorgesehen sein, die zugeschaltete motorische Schließkraft abzuschalten, wenn die Schließgeschwindigkeit trotz der Einwirkung der motorischen Schließkraft auf oder unter einen zweiten unteren Schwellwert fällt. Ein sehr niedriger Wert der Schließgeschwindigkeit trotz hoher Handkraft und zusätzlicher motorischer Schließkraft kann dabei als Anzeichen gewertet werden, dass der Schneidvorgang nicht zu Ende gebracht werden kann. Der zweite untere Schwellwert kann insbesondere auch einer Schließgeschwindigkeit gleich Null entsprechen. Ein Öffnen der Messeranordnung kann als eine Schließgeschwindigkeit kleiner als Null interpretiert werden.

Beispielsweise kann eine handbetätigte Gartenschere mit einer Messeranordnung vorgesehen sein, welche in einem geöffneten Zustand zur Aufnahme eines Schnittguts ausgebildet ist und für einen Schneidvorgang durch Einwirkung einer Handkraft auf eine Griffanordnung schließbar ist, wobei ein Antriebsmotor vorhanden ist, um eine motorische Schließkraft auf die Messeranordnung zuzuschalten.

Beispielsweise kann wenigstens ein Sensor zur Bestimmung einer Kenngröße eines Schneidvorgangs vorgesehen sein sowie eine Steuereinrichtung, die nach Maßgabe eines bestimmten Wertes der Kenngröße den Antriebsmotor ansteuert und die motorische Antriebskraft zuschaltet.

Beispielsweise kann ein erster Sensor zur Abgabe eines die von einem Benutzer auf die Griffanordnung ausgeübte Handkraft repräsentierenden Handkraft-Sensorsignals eingerichtet ist.

Beispielsweise kann der erste Sensor eine mit einem von zwei Griffen der Griffanordnung verbundene Wägezelle enthalten.

Beispielsweise kann in der Steuereinrichtung ein erster Schwellwert für das Handkraft-Sensorsignal vorgegeben sein.

Beispielsweise kann, dass die Steuereinrichtung die motorische Schließkraft bei unter dem ersten Schwellwert liegendem Handkraft-Sensorsignal nicht zuschaltet.

Beispielsweise kann der erste Schwellwert veränderlich vorgebbar sein.

Beispielsweise kann ein zweiter Sensor zur Bestimmung der Schließgeschwindigkeit der Messeranordnung eingerichtet sein.

Beispielsweise kann der zweite Sensor zur Abgabe eines den Schließwinkel der Messeranordnung repräsentierenden zweiten Sensorsignals eingerichtet sein und die Steuereinrichtung kann aus zeitlich aufeinander folgend gewonnenen zweiten Sensorsignalen die Schließgeschwindigkeit ermitteln.

Beispielsweise kann der zweite Sensor ein Drehpotentiometer um das Scherengewerbe enthalten.

Beispielsweise kann für die Schließgeschwindigkeit ein zweiter oberer Schwellwert vorgegeben sein.

Beispielsweise kann die Steuereinrichtung so ausgebildet sein, dass sie die motorische Antriebskraft nicht zuschaltet, wenn die bestimmte Schließgeschwindigkeit über dem zweiten oberen Schwellwert liegt.

Beispielsweise kann für die Schließgeschwindigkeit ein zweiter unterer Schwellwert vorgegeben sein und die Steuereinrichtung so ausgebildet sein, dass die motorische Antriebskraft nicht zugeschaltet wird oder nach vorangegangener Zuschaltung abgeschaltet wird, wenn die bestimmte Schließgeschwindigkeit auf dem zweiten unteren Schwellwert oder darunter liegt.

Beispielsweise kann der untere Schwellwert einer Schließgeschwindigkeit gleich Null entsprechen.

Beispielsweise kann die Steuereinrichtung die motorische Schließkraft zuschalten, wenn das Handkraft-Sensorsignal über dem ersten Schwellwert und die Schließgeschwindigkeit unter dem zweiten oberen Schwellwert liegt.

Beispielsweise kann die Steuereinrichtung die motorische Schließkraft zugeschaltet lassen, wenn das Handkraft-Sensorsignal unter den ersten Schwellwert fällt.

Beispielsweise kann die Steuereinrichtung die motorische Schließkraft abschalten, wenn das Handkraft-Sensorsignal den ersten Schwellwert unterschreitet und/oder wenn die Schließgeschwindigkeit den zweiten oberen Schwellwert überschreitet.

Beispielsweise kann der Antriebsmotor ein Elektromotor sein.

Beispielsweise können der Elektromotor und die Steuereinrichtung aus einer Batterie gespeist sein.

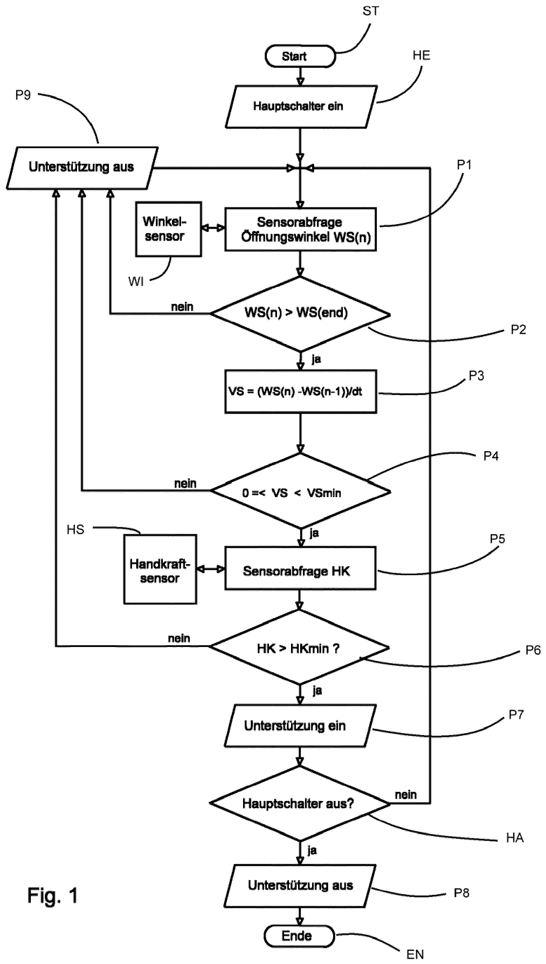

Die Erfindung ist nachfolgend anhand eines in Fig. 1 dargestellten Ablaufschemas einer bevorzugten Steuerungsvariante noch eingehend veranschaulicht.

Bei dem in Fig. 1 dargestellten Ablaufschema sind die mit Start ST und Ende EN bezeichneten Felder lediglich als Teile des Ablaufschemas zu verstehen, ohne dass damit konkrete Geräteaktionen verbunden sind.

Aus Sicherheitsgründen ist an dem Gerät ein Hauptschalter vorgesehen, mittels welchem die Stromzuführung zu dem Antriebsmotor und eventuell der elektronischen Steuereinrichtung unabhängig von einer Steuerung des Antriebsmotors durch die Steuereinrichtung hergestellt bzw. unterbrochen werden kann und welcher in einem ersten Schritt HE vom Benutzer eingeschaltet wird.

Die Zuschaltung einer motorischen Schließkraft sei nachfolgend und in Fig. 1 als Unterstützung, d. h. Unterstützung der Handkraftbetätigung der Schere bezeichnet und verstanden.

Der Ablauf der Steuerung in der Steuereinrichtung umfasst eine Mehrzahl aufeinander folgender Zyklen, in welchen jeweils Kenngrößen des aktuellen Schneidvorgangs bestimmt und ausgewertet werden. Zur Ermittlung von aktuellen Werten von Kenngrößen sind insbesondere ein Winkelsensor WT, welcher zur Bestimmung eines aktuellen Öffnungswinkels WS (n) der Messeranordnung und/oder der Handgriffanordnung der Gartenschere ausgebildet ist, und ein Handkraftsensor HS, welcher zur Messung einer vom Benutzer auf die Handgriffanordnung ausgeübten Handkraft HK in Schließrichtung der Handgriffanordnung eingerichtet ist, vorgesehen.

Bei dem skizzierten Steuerungsablauf wird anfänglich in einem Schritt P1 durch die Steuereinrichtung von einem Winkelsensor WI der aktuelle Öffnungswinkel WS (n) abgefragt und der abgefragte Wert WS (n) des Öffnungswinkels wird im Schritt P2 mit einem für den Winkelsensor abgespeicherten und der Endstellung der Schließbewegung der Messeranordnung entsprechenden Grenzwert WS (end) verglichen. Solange ein aktueller Schneidvorgang nicht abgeschlossen ist, ist die Messeranordnung der Schere nicht vollständig geschlossen und der aktuell gemessene Wert WS (n) des Öffnungswinkels ist größer als der gespeicherte Grenzwert für den Öffnungswinkel. In diesem Falle schreitet die Steuereinrichtung in dem Verarbeitungsablauf zu P3 weiter und bestimmt aus dem aktuellen Wert WS (n) des Öffnungswinkels und wenigstens einem aus einem um eine Zeitspanne dt zurückliegenden Wert WS (n-1) des Öffnungswinkels einen aktuellen Wert für die Schließgeschwindigkeit VS = (WS(n) - WS (n-1)) dt. Bei gleichbleibenden Zeitspannen dt zwischen verglichenen Winkelwerten kann als Maß für die Schließgeschwindigkeit auch nur die Winkeldifferenz WS (n) - WS (n-1) bestimmt und ausgewertet werden.

Dieser für die Schließgeschwindigkeit bestimmte Wert VS wird danach im Schritt P4 mit einem Schwellwert VSmin verglichen.

Wenn die so ermittelte Schließgeschwindigkeit größer als Null ist, aber einen abgespeicherten Mindestwert VSmin unterschreitet, was auf eine für die Fortsetzung des Schneidvorgangs eventuell kritische Widerstandskraft des zuschneidenden Astes im Vergleich zur maximal möglichen Handkraft des Benutzers hindeutet, wird in einem Schritt P5 zusätzlich von einem Handkraftsensor HS die aktuell von dem Benutzer auf die Handgriffanordnung ausgeübte Handkraft HK abgefragt und im Schritt P6 mit einem gespeicherten Schwellwert HKmin verglichen.

Liegt bei dem letztgenannten Vergleich in P6 die durch die Steuereinrichtung von dem Handkraftsensor abgefragte Handkraft über dem gespeicherten Schwellwert HKmin, so wird dies im Sinne der Prüfkriterien der Steuereinrichtung so interpretiert, dass der Benutzer versucht, mit der ihm zur Verfügung stehenden Kraft den Schneidvorgang fortzusetzen, dass aber wegen der geringen Schneidgeschwindigkeit VS der Benutzer mit der ihm zur Verfügung stehenden Kraft an seine Grenzen stoßen könnte. Bei über der ersten Schwelle HKmin liegender Handkraft HK und gleichzeitig unter der zweiten oberen Schwelle VSmin liegender Schneidgeschwindigkeit VS wird daher als Schritt P7 die Kraftunterstützung eingeschaltet, indem die Steuereinrichtung den Antriebsmotor, welcher die motorische Schließkraft aufbringt, einschaltet.

Bei eingeschalteter Unterstützung wird in jedem Zyklus in einem Schritt P8 überprüft, ob der Hauptschalter noch eingeschaltet ist und gegebenenfalls ein neuer Prüfzyklus mit erneuter Abfrage des Öffnungswinkels WS begonnen.

Wenn im Verlauf eines Schneidvorgangs die Endstellung der Schließbewegung erreicht ist, ergibt sich für den Öffnungswinkel ein Wert WS (n), welcher nicht mehr größer ist als der gespeicherte Grenzwert WS (end), und nach dem Vergleich in P2 wird die Unterstützung gemäß P9 ausgeschaltet.

Wenn sich beim Vergleich der Schließgeschwindigkeit VS mit dem gespeicherten zweiten oberen Schwellwert VSmin in P4 ergibt, dass die aktuelle Schneidgeschwindigkeit größer ist als der gespeicherte zweite obere Grenzwert, wird dies im Sinne der Prüfkriterien der Steuereinrichtung so interpretiert, dass der Schneidvorgang hinreichend zügig allein durch die Benutzerkraft erfolgen kann und eine Unterstützung durch die motorische Schließkraft nicht erforderlich ist. In diesem Falle unterbleibt gemäß P9 das Zuschalten der Unterstützung.

Wenn zwar die Überprüfung der Schneidgeschwindigkeit in P4 auf die Notwendigkeit einer Unterstützung hinweist, die aktuelle Handkraft HK aber kleiner ist als der erste Schwellwert HKmin wird dies im Sinne der Prüfkriterien der Steuereinrichtung im Schritt P6 so interpretiert, dass der Benutzer ausreichend Kraftreserven für einen allein durch Handkraft durchgeführten Schnitt besitzt und den Schneidvorgang bewußt mit geringer Schneidgeschwindigkeit durchführt. Auch in diesem Fall unterbleibt gemäß P9 die Zuschaltung der Unterstützung.

Wenn der Hauptschalter ausgeschaltet wird, wird auch eine zuvor durch die Steuereinrichtung zugeschaltete Unterstützung ausgeschaltet, wobei typischerweise mit Ausschalten des Hauptschalters auch die Stromzufuhr zu dem die motorische Schließkraft aufbringenden Antriebsmotor unterbrochen ist und das Ausschalten der Unterstützung vor dem Ende des Ablaufschemas dann im wesentlichen als ein Rücksetzen der Steuereinrichtung zu verstehen ist.

Der anhand der Fig. 1 schematisch skizzierte Ablauf einer Steuerung durch die Steuereinrichtung ist lediglich als ein vorteilhaftes Beispiel zu sehen, welches auf verschiedene Arten abgewandelt werden kann. Insbesondere kann die Reihenfolge der Abfrage der beiden dargestellten Sensoren zeitlich umgekehrt liegen. Durch Sensorabfrage gewonnene Werte können über mehrere Zyklen gemittelt werden, um Falschreaktionen der Steuerung durch zufällige Schwankung von Sensormesswerten zu vermeiden. Zusätzlich können Plausibilitätsprüfungen von Sensorwerten vorgesehen sein.

## Patentansprüche

1. Handbetätigte Gartenschere mit einer Messeranordnung, welche in einem geöffneten Zustand zur Aufnahme eines Schnittguts ausgebildet ist und für einen Schneidvorgang durch Einwirkung einer Handkraft auf eine Griffanordnung schließbar ist, wobei ein Antriebsmotor vorhanden ist, um eine motorische Schließkraft als Zusatzkraft zur Handkraft auf die Messeranordnung zuzuschalten, wobei wenigstens ein Sensor zur Bestimmung einer Kenngröße eines Schneidvorgangs vorgesehen ist, und eine elektronische Steuereinrichtung vorgesehen ist, die nach Maßgabe eines bestimmten Wertes der Kenngröße den Antriebsmotor ansteuert und die motorische Antriebskraft automatisch zuschaltet, wobei der Sensor zur Abgabe eines die Kenngröße repräsentierenden SensorSignals eingerichtet ist, wobei
der Sensor zur Abgabe eines die von einem Benutzer auf die Griffanordnung ausgeübte Handkraft repräsentierenden Handkraft-Sensorsignals eingerichtet ist, **dadurch gekennzeichnet**,
die Gartenschere des Weiteren ein mit einem Finger einer einen Handgriff der Griffanordnung greifenden Benutzerhand erreichbares Betätigungselement umfasst, mit dem die motorische Schließkraft zuschaltbar ist.

2. Gartenschere nach Anspruch 1, **dadurch gekennzeichnet, dass** der Sensor eine mit einem von zwei Griffen der Griffanordnung verbundene Wägezelle enthält.

3. Gartenschere nach Anspruch 1 oder 2, **dadurch gekennzeichnet, dass** in der Steuereinrichtung ein erster Schwellwert für das Handkraft-Sensorsignal vorgegeben ist.

4. Gartenschere nach Anspruch 3, **dadurch gekennzeichnet, dass** die Steuereinrichtung die motorische Schließkraft bei unter dem ersten Schwellwert liegendem Handkraft-Sensorsignal nicht zuschaltet.

5. Gartenschere nach Anspruch 4, **dadurch gekennzeichnet, dass** der erste Schwellwert veränderlich vorgebbar ist.

6. Gartenschere nach einem der Ansprüche 1 bis 5, **dadurch gekennzeichnet, dass** der Handkraft-Sensor ein erster Sensor ist und ein zweiter Sensor zur Bestimmung der Schließgeschwindigkeit der Messeranordnung eingerichtet ist.

7. Gartenschere nach Anspruch 6, **dadurch gekennzeichnet, dass** der zweite Sensor zur Abgabe eines den Schließwinkel der Messeranordnung repräsentierenden zweiten Sensorsignals eingerichtet ist und die Steuereinrichtung aus zeitlich aufeinander folgend gewonnenen zweiten Sensorsignalen die Schließgeschwindigkeit ermittelt.

8. Gartenschere nach Anspruch 7, **dadurch gekennzeichnet, dass** der zweite Sensor ein Drehpotentiometer um das Scherengewerbe enthält.

9. Gartenschere nach einem der Ansprüche 6 bis 8, **dadurch gekennzeichnet, dass** für die Schließgeschwindigkeit ein zweiter oberer Schwellwert vorgegeben ist, insbesondere wobei
die Steuereinrichtung die motorische Antriebskraft nicht zuschaltet, wenn die bestimmte Schließgeschwindigkeit über dem zweiten oberen Schwellwert liegt.

10. Gartenschere nach einem der Ansprüche 6 bis 9, **dadurch gekennzeichnet, dass** für die Schließgeschwindigkeit ein zweiter unterer Schwellwert vorgegeben ist und die Steuereinrichtung die motorische Antriebskraft nicht zuschaltet oder nach vorangegangener Zuschaltung abschaltet, wenn die bestimmte Schließgeschwindigkeit auf dem zweiten unteren Schwellwert oder darunter liegt, insbesondere wobei der untere Schwellwert einer Schließgeschwindigkeit gleich Null entspricht.

11. Gartenschere nach Anspruch 4 und 9, **dadurch gekennzeichnet, dass** die Steuereinrichtung die motorische Schließkraft zuschaltet, wenn das Handkraft-Sensorsignal über dem ersten Schwellwert und die Schließgeschwindigkeit unter dem zweiten oberen Schwellwert liegt.

12. Gartenschere nach Anspruch 11, **dadurch gekennzeichnet, dass** die Steuereinrichtung die motorische Schließkraft zugeschaltet läßt, wenn das Handkraft-Sensorsignal unter den ersten Schwellwert fällt oder dass die Steuereinrichtung die motorische Schließkraft abschaltet, wenn das HandkraftSensorsignal den ersten Schwellwert unterschreitet und/oder wenn die Schließgeschwindigkeit den zweiten oberen Schwellwert überschreitet.

13. Gartenschere nach einem der Ansprüche 1 bis 12, **dadurch gekennzeichnet, dass** der Antriebsmotor ein Elektromotor ist.

14. Gartenschere nach Anspruch 13, **dadurch gekennzeichnet, dass** der Elektromotor und die Steuereinrichtung aus einer Batterie gespeist sind.

15. Gartenschere nach einem der Ansprüche 1 bis 14, **dadurch gekennzeichnet, dass** der Handkraft-Sensor in einen von zwei unter Einwirkung der Handkraft relativ zueinander verlagerbaren Handgriffen integriert ist.

## Claims

1. Manually operated garden shears having a blade arrangement, which is formed in an opened state to receive cuttings and can be closed for a cutting procedure by the effect of a manual force on a handle arrangement, wherein a drive motor is available to switch on a motorised closing force, as an additional force to the manual force, to the blade arrangement, wherein at least one sensor is provided to determine a parameter of a cutting procedure, and an electronic control device is provided which controls the drive motor according to a certain value of the parameter and automatically switches on the motorised driving force, wherein the sensor is equipped to emit a sensor signal representing the parameter, wherein
the sensor is equipped to emit a manual force sensor signal representing the manual force exerted by the user on the handle arrangement, **characterised in that** the garden shears further comprise an operating element reachable by a finger of a user's hand gripping a handle of the handle arrangement, with which the motorised closing force can be switched on.

2. Garden shears according to claim 1, **characterised in that** the sensor contains a load cell connected to one of two handles of the handle arrangement.

3. Garden shears according to claim 1 or 2, **characterised in that** a first threshold value is predetermined for the manual force sensor signal in the control device.

4. Garden shears according to claim 3, **characterised in that** the control device does not switch on the motorised closing force when the manual force sensor signal is below the first threshold value.

5. Garden shears according to claim 4, **characterised in that** the first threshold value is variably predeterminable.

6. Garden shears according to one of claims 1 to 5, **characterised in that** the manual force sensor is a first sensor, and a second sensor is equipped to determine the closing speed of the blade arrangement.

7. Garden shears according to claim 6, **characterised in that** the second sensor is equipped to emit a second sensor signal representing the closing angle of the blade arrangement, and the control device determines the closing speed from temporally successively obtained second sensor signals.

8. Garden shears according to claim 7, **characterised in that** the second sensor contains a rotary potentiometer around the shears' articulation.

9. Garden shears according to one of claims 6 to 8, **characterised in that** a second upper threshold value is predetermined for the closing speed, in particular wherein
the control device does not switch on the motorised drive force when the determined closing speed is above the second upper threshold value.

10. Garden shears according to one of claims 6 to 9, **characterised in that** a second lower threshold value is predetermined for the closing speed, and the control device does not switch on the motorised drive force or switch it off after preceding switching on when the determined closing speed is at the second lower threshold value or below it, in particular wherein
the lower threshold value corresponds to a closing speed equal to zero.

11. Garden shears according to claim 4 and 9, **characterised in that** the control device switches on the motorised closing force when the manual force sensor signal is above the first threshold value and the closing speed is below the second upper threshold value.

12. Garden shears according to claim 11, **characterised in that** the control device leaves the motorised closing force switched on when the manual force sensor signal falls below the first threshold value, or the control device switches off the motorised closing force when the manual force sensor signal falls below the first threshold value and/or when the closing speed exceeds the second upper threshold value.

13. Garden shears according to one of claims 1 to 12, **characterised in that** the drive motor is an electric motor.

14. Garden shears according to claim 13, **characterised in that** the electric motor and the control device are fed from a battery.

15. Garden shears according to one claims 1 to 14, **characterised in that** the manual force sensor is integrated into one of two handles moveable relative to each other under the influence of the manual force.

## Revendications

1. Cisaille de jardin à commande manuelle dotée d'un ensemble de couteaux, laquelle est conçue pour l'admission d'un objet à couper à l'état déployé et peut être fermée pour un processus de coupe sous l'effet d'une force manuelle sur un ensemble de poignée, où un moteur d'entraînement est présent afin d'exercer sur l'ensemble de couteaux une force de fermeture motorisée sous forme de force auxiliaire en complément à la force manuelle, où au moins un capteur est prévu pour la détermination d'une grandeur caractéristique d'un processus de coupe, et un dispositif de commande électronique est prévu qui démarre le moteur d'entraînement en fonction de la mesure d'une valeur déterminée de la grandeur caractéristique et active automatiquement la force d'entraînement motorisée, où le capteur est conçu pour la délivrance d'un signal de capteur représentant la grandeur caractéristique, où le capteur est conçu pour la délivrance d'un signal de capteur de force manuelle représentant la force manuelle exercée sur l'ensemble de poignée, **caractérisée en ce que** la cisaille de jardin comprend en outre un élément d'actionnement, avec lequel la force de fermeture motorisée peut être activée, pouvant être atteint avec un doigt d'une main d'utilisateur actionnant une poignée de l'ensemble de poignée.

2. Cisaille de jardin selon la revendication 1, **caractérisée en ce que** le capteur contient une cellule de pesage reliée avec l'une parmi deux poignées à l'ensemble de poignée.

3. Cisaille de jardin selon la revendication 1 ou la revendication 2, **caractérisée en ce qu'**une première valeur limite est prédéfinie pour le signal de capteur de la force manuelle dans le dispositif de commande.

4. Cisaille de jardin selon la revendication 3, **caractérisée en ce que** le dispositif de commande n'active pas la force de fermeture motorisée pour un signal de capteur de force manuelle se situant en-dessous de la première valeur limite.

5. Cisaille de jardin selon la revendication 4, **caractérisée en ce que** la première valeur limite peut être définie de manière variable.

6. Cisaille de jardin selon l'une des revendications 1 à 5, **caractérisée en ce que** le capteur de force manuelle est un premier capteur et un deuxième capteur est installé pour la détermination de la vitesse de fermeture de l'ensemble de couteaux.

7. Cisaille de jardin selon la revendication 6, **caractérisée en ce que** le deuxième capteur est conçu pour la délivrance d'un deuxième signal de capteur représentant l'angle de fermeture de l'ensemble de couteaux et le dispositif de commande détermine la vitesse de fermeture suite à des deuxièmes signaux de capteur reçus de manière successive dans le temps les uns après les autres.

8. Cisaille de jardin selon la revendication 7, **caractérisée en ce que** le deuxième capteur contient un potentiomètre de rotation autour de la fonction de cisaille.

9. Cisaille de jardin selon l'une des revendications 6 à 8, **caractérisée en ce qu'**une deuxième valeur limite supérieure est prédéfinie pour la vitesse de fermeture, notamment où
le dispositif de commande n'active pas la force d'entraînement motorisée lorsque la vitesse de fermeture déterminée se situe au-dessus de la deuxième valeur limite supérieure.

10. Cisaille de jardin selon l'une des revendications 6 à 9, **caractérisée en ce qu'**une deuxième valeur limite inférieure est prédéfinie pour la vitesse de fermeture et le dispositif de commande n'active pas la force d'entraînement motorisée ou l'arrête après une précédente activation lorsque la vitesse de fermeture déterminée se situe à la deuxième valeur limite inférieure ou en dessous, notamment où la valeur limite inférieure correspond à une vitesse de fermeture égale à zéro.

11. Cisaille de jardin selon la revendication 4 et la revendication 9, **caractérisée en ce que** le dispositif de commande active la force de fermeture motorisée lorsque le signal de capteur de force manuelle se situe au-dessus de la première valeur limite et que la vitesse de fermeture se situe en dessous de la deuxième valeur limite supérieure.

12. Cisaille de jardin selon la revendication 11, **caractérisée en ce que** le dispositif de commande conserve la force de fermeture motorisée à l'état activé lorsque le signal de capteur de force manuelle tombe en-dessous de la première valeur limite ou que le dispositif de commande enlève la force de fermeture motorisée lorsque le signal de capteur de force manuelle est en-dessous de la première valeur limite, et/ou lorsque la vitesse de fermeture dépasse la deuxième valeur limite supérieure.

13. Cisaille de jardin selon l'une des revendications 1 à 12, **caractérisée en ce que** le moteur d'entraînement est un moteur électrique.

14. Cisaille de jardin selon la revendication 13, **caractérisée en ce que** le moteur électrique et le dispositif de commande sont alimentés à partir d'une batterie.

15. Cisaille de jardin selon l'une des revendications 1 à 14, **caractérisée en ce que** le capteur de force manuelle est intégré dans une parmi deux poignées mobiles l'une par rapport à l'autre sous l'effet de la force manuelle.
